# EUROPEAN PATENT SPECIFICATION

(11) **EP 1 605 759 B1**
(45) Date of publication and mention of the grant of the patent: **23.08.2006**
(21) Application number: 04718955.0
(22) Date of filing: 10.03.2004
(51) Int. Cl.: A01N 43/80, A01N 61/00, A01N 43/42, A01N 25/32

(54) **HERBICIDAL MIXTURES COMPRISING A SAFENER**
HERBIZIDE ZUSAMMENSETZUNG, DIE EINEN SAFENER ENTHÄLT
MELANGES HERBICIDES CONTENANT UN PHYTOPROTECTEUR

(30) Priority: 13.03.2003 US 453976 P
(43) Date of publication of application: 21.12.2005
(73) Proprietor: BASF Aktiengesellschaft, 67056 Ludwigshafen (DE)
(72) Inventor: WITSCHEL, Matthias, 67098 Bad Dürkheim (DE); LANDES, Andreas, 67354 Römerberg-Heiligenstein (DE); SIEVERNICH, Bernd, 67454 Hassloch (DE)
(86) International application number: PCT/EP2004/002434
(87) International publication number: WO 2004/080172

(56) References cited:
- EP-A- 0 900 795
- WO-A-97/41116
- WO-A-98/31681

## Description

The present invention relates to herbicidal mixture comprising
A) a 3-heterocyclyl-substituted benzoyl derivative selected from the group of 4-[2-chloro-3-(3-methyl-isoxazol-5-yl)-4-methylsulfonylbenzoyl]-1-methyl-5-hydroxy-1H-pyrazole, 4-[2-methyl-3-(3-methyl-isoxazol-5-yl)-4-methylsulfonylbenzoyl]-1-methyl-5-hydroxy-1H-pyrazole and 4-[2-methyl-3-(4,5-dihydro-isoxazol-3-yl)-4-methylsulfonylbenzoyl]-1-methyl-5-hydroxy-1H-pyrazole,
   or one of its environmentally compatible salts;
B) a safening effective amount of cloquintocet, or its environmentally compatible salts, amides, esters and hydrates;
   and, if desired,
C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

The invention furthermore relates to herbicidal compositions comprising a herbicidally active amount of a herbicidal mixture as defined above and at least one inert liquid and/or solid carrier and, if desired, at least one surfactant.

Moreover, the invention relates to processes for the preparation of these compositions and to a method of controlling selectively undesirable vegetation in crops.

In crop protection products, it is always desirable to increase the selectivity of a herbicide or a herbicidal mixture in crops. It is an object of the present invention to increase the selectivity of the herbicidally active 3-heterocyclyl-substituted benzoyl derivatives of the group A or herbicidal mixtures comprising them in crops while keeping the activity of an active ingredient(s) and the reliability of action on the weeds.

We have found that this object is achieved by the mixtures defined at the outset. We have furthermore found herbicidal compositions which comprise these mixtures, processes for their preparation, and methods of controlling undesirable vegetation in crops. In the last-mentioned cases, it is irrelevant whether the herbicidally active compounds of the components A), B) and, if desired, C) are formulated and applied jointly or separately and in which sequence they are applied in the case of separate application.

Suitable components C) are, as acetyl-CoA carboxylase inhibitors(ACC), for example cyclohexenone oxime ethers, phenoxyphenoxypropionic esters or arylaminopropionic acids. The acetolactate synthase inhibitors (ALS) include, inter alia, imidazolinones, pyrimidyl ethers, sulfonamides or sulfonyl ureas. Relevant auxin herbicides are, inter alia, pyridine carboxylic acids, 2,4-D or benazolin. Lipid biosynthesis inhibitors which are used are, inter alia, anilides, chloroacetanilides, thioureas, benfuresate or perfluidone. Suitable mitosis inhibitors are, inter alia, carbamates, dinitroanilines, pyridines, butamifos, chlorthal-dimethyl (DCPA) or maleic hydrazide. Examples of protoporphyrinogen IX oxidase inhibitors are, inter alia, diphenyl ethers, oxadiazoles, cyclic imides or pyrazoles. Suitable photosynthesis inhibitors are, inter alia, propanil, pyridate, pyridafol, benzothiadiazinones, dinitrophenols, dipyridylenes, ureas, phenols, chloridazon, triazine, triazinone, uracils or biscarbamates. The synergists are, inter alia, oxiranes. Examples of suitable growth substances are aryloxyalkanoic acids, benzoic acids or quinolinecarboxylic acids. The group "various other herbicide" is to be understood as meaning, inter alia, the classes of the active ingredients dicloropropionic acids, dihydrobenzofurans, phenylacetic acids and individual herbicides mentioned below whose mechanism of action is not (fully) understood.

Other suitable components C) are active compounds selected from the group of the amides, auxin transport inhibitors, carotenoic biosynthesis inhibitors, enolpyruvylshikimate 3-phosphate synthase inhibitors (EPSPS), glutamine synthetase inhibitors and cell wall synthesis inhibitors.

Examples of herbicides (component C) which can be used in combination with the 3-heterocyclyl-substituted benzoyl-derivatives of group A and the safener of group B according to the present invention are, inter alia:
C1 acetyl-CoA carboxylase inhibitors (ACC), for example
   - cyclohexenone oxime ethers, such as alloxydim, clethodim, cloproxydim, cycloxydim, sethoxydim, tralkoxydim, butroxydim, clefoxydim or tepraloxydim;
   - phenoxyphenoxypropionic esters, such as clodinafop-propargyl, cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl; or
   - arylaminopropionic acids, such as flamprop-methyl or flamprop-isopropyl;
C2 acetolactate synthase inhibitors (ALS), for example
   - imidazolinones, such as imazapyr, imazaquin, imazamethabenz-methyl (imazame), imazamox, imazapic or imazethapyr;
   - pyrimidyl ethers, such as pyrithiobac-acid, pyrithiobac-sodium, bispyribac-sodium, KIH-6127 or pyribenzoxym;
   - sulfonamides, such as florasulam, flumetsulam or metosulam; or
   - sulfonylureas, such as amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C3 amides, for example
   - allidochlor (CDAA), benzoylprop-ethyl, bromobutide, chlorthiamid, diphenamid, etobenzanid (benzchlomet), fluthiamide, fosamin or monalide;
C4 auxin herbicides, for example
   - pyridinecarboxylic acids, such as clopyralid or picloram; or
   - 2,4-D or benazolin;
C5 auxin transport inhibitors, for example
   - naptalame or diflufenzopyr;
C6 carotenoid biosynthesis inhibitors, for example
   - benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtemone, norflurazon or amitrol;
C7 enolpyruvylshikimate-3-phosphate synthase inhibitors (EPSPS), for example
   - glyphosate or sulfosate;
C8 glutamine synthetase inhibitors, for example
   - bilanafos (bialaphos) or glufosinate-ammonium;
C9 lipid biosynthesis inhibitors, for example
   - anilides, such as anilofos or mefenacet;
   - chloroacetanilides, such as dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
   - thioureas, such as butylate, cycloate, di-allate, dimepiperate, EPTC, esprocarb, molinate, pebulate, prosulfocarb, thiobencarb (benthiocarb), tri-allate or vernolate; or
   - benfuresate or perfluidone;
C10 mitosis inhibitors, for example
   - carbamates, such as asulam, carbetamid, chlorpropham, orbencarb,
   - pronamid (propyzamid), propham or tiocarbazil;
   - dinitroanilines, such as benefin, butralin, dinitramin, ethalfluralin, fluchloralin, oryzalin, pendimethalin, prodiamine or trifluralin;
   - pyridines, such as dithiopyr or thiazopyr; or
   - butamifos, chlorthal-dimethyl (DCPA) or maleic hydrazide;
C11 protoporphyrinogen IX oxidase inhibitors, for example
   - diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
   - oxadiazoles, such as oxadiargyl or oxadiazon;
   - cyclic imides, such as azafenidin, butafenacil, carfentrazone-ethyl, cinidon-ethyl, flumirclorac-pentyl, flumioxazin, flumipropyn, flupropacil, fluthiacet-methyl, sulfentrazone or thidiazimin; or
   - pyrazoles, such as ET-751, JV 485 or nipyraclofen;
C12 photosynthesis inhibitors, for example
   - propanil, pyridate or pyridafol;
   - benzothiadiazinones, such as bentazone;
   - dinitrophenols, for example bromofenoxim, dinoseb, dinoseb-acetate, dinoterb or DNOC;
   - dipyridylenes, such as cyperquat-chloride, difenzoquat-methylsulfate, diquat or paraquat-dichloride;
   - ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
   - phenols, such as bromoxynil or ioxynil;
   - chloridazon;
   - triazines, such as ametryn, atrazine, cyanazine, desmetryn, dimethamethryn, hexazinone, prometon, prometryn, propazine, simazine, simetryn, terbumeton, terbutryn, terbutylazine or trietazine;
   - triazinones, such as metamitron or metribuzin;
   - uracils, such as bromacil, lenacil or terbacil; or
   - biscarbamates, such as desmedipham or phenmedipham;
C13 synergists, for example
   - oxiranes, such as tridiphane;
C14 growth substances, for example
   - aryloxyalkanoic acids, such as 2,4-DB, clomeprop, dichlorprop, dichlorprop-P (2,4-DP-P), fluoroxypyr, MCPA, MCPB, mecoprop, mecoprop-P or triclopyr;
   - benzoic acids, such as chloramben or dicamba; or
   - quinolinecarboxylic acids, such as quinclorac or quinmerac;
C15 cell wall synthesis inhibitors, for example
   - isoxaben or dichlobenil;
C16 various other herbicides, for example
   - dichloropropionic acids, such as dalapon;
   - dihydrobenzofurans, such as ethofumesate;
   - phenylacetic acids, such as chlorfenac (fenac); or
   - aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid or trimeturon;
or their environmentally compatible salts.

The 3-heterocyclyl-substituted benzoyl derivatives of the group A are described in WO 97/41116, WO 97/41118 and WO 98/31681.

Cloquintocet and its salts, amides, esters and hydrates are disclosed in "Herbizide [Herbicides]", Hock, Fedtke, Schmidt, 1^{st} edition, Thieme 1995, p. 266, WO 02/36566 and WO 02/34048.

The herbicidally active compounds from amongst groups C1 to C16 are described, for example, in
- "Herbizide [Herbicides]", Hock, Fedtke, Schmidt, 1st edition, Thieme 1995 (s. "quinclorac" p. 238, "molinat" p. 32, "butachlor" p. 32, "pretilachlor" p. 32, "dithiopyr" p. 32, "mefenacet" p. 32, "fenoxapropethyl" p. 216, "dimepiperate" p. 32, "pyrazolynate" p. 146, "pyrazoxyfen" p. 146, "bensulfuronmethyl" p. 31, "pyrazosulfuron-ethyl" p. 31, "cinbsulfuron" p. 31, "benfuresate" p. 233, "bromobutide" p. 243, "dymron" p. 243, "dimethyametryn" p. 118, "esprocarb" p. 229, "pyributicarb" p. 32, "cinemthylin" p. 32, "propanil" p. 32, "2,4-D" p. 30, "bentazon" p. 30, "azimsulfuron (DPX-A-8947)" p. 175, "mecoprop-P" p. 237, "chlorpropham" p. 205, "ethoxyfen" p. 30, "haloxyfop-P-methyl" p. 38, "haloxyfop-ethoxyethyl" p. 38, "flumiclorac-pentyl" p. 35, "flupropacil" p. 143, "nipyraclofen" p. 145, "metosulam" p. 33, "ethametsulfuron-methyl" p. 36, "thifensulfuron-methyl" p. 35, "pyrithiobac acid" p. 181);
- "Agricultural Chemicals", Book II Herbicides, 1993 (s. "thiobencarb" p. 85, "benzofenap" p. 221, "napropanilid" p. 49, "piperophos" p. 102, "anilofos" p. 241, "imazosulfuron (TH-913)" p. 150, "etobenzamid (HW-52)" p. 54, "sulcotrione (ICIA-0051)" p. 268, "poast" p. 253, "focus" p. 222, "dimethenamid" p. 48, "sulfosate" p. 236, "2,4-DB" p. 10, "dichlorprop-P" p. 6, "flupoxam" p. 44, "prosulfocarb" p. 84, "quinmerac" p. 233, "metazachlor" p. 64, "flurtamone" p. 265, "bromofenoxim" p. 228, "fomesafen" p. 248, "imazamethabenz-methyl" p. 153, "clodinafop-propargyl" p. 214, "fenoxaprop-P-ethyl" p. 208, "fluazifop-P-butyl" p. 207, "quizalofop-P-ethyl" p. 210, "quizalofop-terfuryl" p. 211, "flumioxazin" p. 43, "flumipropyn" p. 267, "sulfentrazone" p. 261, "thiazopyr" p. 226, "pyrithiobac-sodium" p. 266, "flumetsulam" p. 227, "amidosulfuron" p. 151, "halosulfuron-methyl" p. 148, "rimsulfuron" p. 138, "tribenuron-methyl" p. 139, "triflusulfuron-methyl" p. 137, "primisulfuron-methyl" p. 147);
- "Agricultural Chemicals", Book II Herbicides, 13^{th} Edition (s. "carfenstole" p. 284, "sulfosulfuron" p. 145, "ethoxy-sulfuron" p. 149, "pyribenzoxym" p. 279, "diflufenzopyr" p. 90, "ET-751" p. 278, "carfentrazone-ethyl" p. 267, "fluthiacet-methyl" p. 277, "imazapic" p. 160, "butenachlor" p. 54, "tiocarbazil" p. 84, "fluthiamide" p. 62, "isoxa-flutole" p. 283, "butroxydim" p. 259);
- "Short Review of Herbicides & PGRs 1991, Hodogaya Chemicals (s. "furyloxyfen" p. 142, "triazofenamid" p. 268, "thenylchlorid (NSK-850)" p. 52, "cumyluron (JC-940)" p. 90, "pendimethalin (AC-92553)" p. 58, "buthidazole" p. 88, "cyprazole" p. 38, "allidochlor" p. 48, "benzoylprop-ethyl" p. 38, "chlorthiamid" p. 150, "diphenamid" p. 34, "flamprop-methyl" p. 40, "fosamin" p. 232, "isoxaben" p. 42, "monalide" p. 32, "naptalam" p. 36, "pronamid" p. 34, "bialaphos" p. 234, "glufosinafie-ammonium" p. 234, "glyphosate" p. 232, "amitrol" p. 254, "clomeprop p. 20, "dichlorprop" p. 6, "fenoprop" p. 8, "fluroxypyr" p. 156, "MCPA" p. 4, "MCPB" p. 8, "mecoprop" p. 6, "napropamide" p. 16, "triclopyr" p. 154, "chloramben" p. 28, "dicamba" p. 26, "clomazone" p. 268, "diflufenican" p. 42, "fluorochloridone" p. 266, "fluridone" p. 156, "asulam" p. 112, "barban" p. 100, "butylate" p. 106, "carbetamide" p. 36, "chlorobufam" p. 100, "cycloate" p. 108, "desmedipham" p. 104, "di-allate" p. 106, "EPTC" p. 108, "orbencarb" p. 112, "pebulate" p. 106, "phenisopham" p. 118, "phenmedipham" p. 104, "propham" p. 100, "sulfallate" p. 110, "terbucarb" p. 102, "tri-allate" p. 108, "vemolate" p. 108, "acetochlor" p. 48, "alachlor" p. 46, "diethathyl-ethyl" p.48, "dimethachlor" p. 50, "metolachlor" p. 46, "propachlor" p. 44, "pyrnachlor" p. 44, "terbuchlor" p. 48, "xylachlor" p. 52, "alloxydim" p. 260, "clethodim" p. 270, "cloproxydim" p. 268, "tralkoxydim" p. 270, "dalapon" p. 212, "ethofumesate" p. 124, "benefin" p. 54, "butralin" p. 58, "dinitramin" p. 56, "ethalfluralin" p. 60, "fluchloralin" p. 54, "isopropalin" p. 58, "nitralin" p. 58, "oryzalin" p. 60, "prodiamine" p. 62, "profluralin" p. 54, "trifluralin" p. 54, "dinoseb" p. 128, "dinoseb-acetate" p. 128, "dinoterb" p. 128, "DNOC" p. 126, "acifluorfen-sodium" p. 142, "aclonifen" p. 146, "bifenox" p. 140, "chlornitrofen" p. 138, "difenoxuron" p. 76, "fluorodifen" p. 138, "fluoroglycofen-ethyl" p. 146, "lactofen" p. 144, "nitrofen" p. 136, "nitrofluorfen" p. 140, "oxyfluorfen" p. 140, "cyperquat-chloride" p. 158, "difenzoquat-methylsulfate" p. 160, "diquat" p. 158, "paraquat-dichloride" p. 158, "benzthiazuron" p. 82, "buturon" p. 66, "chlorbromuron" p. 72, "chloroxuron" p. 76, "chlorotoluron" p. 74, "cycluron" p. 84, "dimefuron" p. 88, "diuron" p. 70, "ethidimuron" p. 86, "fenuron" p. 64, "fluometuron" p. 68, "isoproturon" p. 80, "isouron" p. 88, "karbutilate" p. 76, "linuron" p. 72, "methabenzthiazuron" p. 82, "metoxuron" p. 72, "monolinuron" p. 66, "monuron" p. 64, "neburon" p. 72, "siduron" p. 68, "tebuthiuron" p. 86, "trimeturon" p. 64, "isocarbamid" p. 168, "imazamethapyr" p. 172, "imazapyr" p. 170, "imazaquin" p. 170, "imazethapyr" p. 172, "methazole" p. 162, "oxadiazon" p. 162, "tridiphane" p. 266, "bromoxynil" p. 148, "ioxynil" p. 148, "diclofop-methyl" p. 16, "fenthiaprop-ethyl" p. 20, "fluazifop-butyl" p. 18, "haloxyfop-methyl" p. 18, "isoxapyrifop" p. 22, "propaquizafop" p. 24, "quizalofop-ethyl" p. 20, "chlorfenac" p. 258, "chlorfenprop-methyl" p. 258, "chloridazon" p. 174, "maleic hydrazide" p. 162, "norflurazon" p. 174, "pyridate" p. 176, "clopyralid" p. 154, "picloram" p. 154, "chlorimuron-ethyl" p. 92, "chlorsulfuron" p. 92, "flazasulfuron" p. 96, "metsulfuron-methyl" S.92, "nicosulfuron" p. 96, "sulfometuron-methyl" p. 92, "triasulfuron" p. 94, "ametryn" p. 198, "atrazine" p. 188, "aziprotryne" p. 206, "cyanazine" p. 192, "cyprazine" p. 192, "desmetryne" p. 200, "dipropetryn" p. 202, "eglinazine-ethyl" p. 208, "hexazinone" p. 208, "procyazine" p. 192, "prometone" p. 196, "prometryn" p. 196, "propazine" p. 188, "secbumeton" p. 196, "simazine" p. 188, "simetryn" p. 196, "terbumeton" p. 204, "terbutryn" p. 198, "terbutylazine" p. 190, "trietazine" p. 188, "ethiozine" p. 210, "metamitron" p. 206, "metribuzin" p. 202, "bromacil" p. 180, "lenacil" p. 180, "terbacil" p. 180, "benazolin" p. 262, "bensulide" p. 228, "benzofluor" p. 266, "butamifos" p. 228, "DCPA" p. 28, "dichlobenil" p. 148, "endothal" p. 264, "mefluidide" p. 306, "perfluidone" p. 260, "terbuchlor" p. 48);
- "Global Herbicide Directory" First Edition, 1994 (s. "oxadiargyl" p. 96);
- "European Directory of Agrochemical Products" Volume 2 - Herbicides" Fourth Edition, (s. "buminafos" p. 255).
- "The Pesticide Maunal,12 ^{th} edition, 2000 (s. "bispyribac-sodium" p. 97, "florasulam" p. 420, "cyclosulfamuron" p. 217, "pretiachlor" p. 755)
- Moreover, the compound "DEH-112" is disclosed in European Patent Application EP-A 302 203. The compound "tepraloxydim" is described in DE-A 33 36 140; the compound "cinidon-ethyl" in DE-A 36 03 789 and the compound "fluorbentranil" in EP-A 84 893. Other compounds are known from "Brighton Crop Protection Conference - Weeds - 1993" (S. "thidiazimin" p. 29, "AC-322140" p. 41, "KIH-6127" p. 47, "prosulfuron" p. 53, "KIH-2023" p. 61, "metobenzuron" p. 67). The compound "carfenstrole (CH-900)" is mentioned in EP-A 332 133, and tritosulfuron is described in PCT/EP 96/03996.

The assignment of the active ingredients to the respective mechanisms of action is based on current knowledge. If several mechanisms of action apply to one active ingredient, this substance was only assigned to one mode of action.

The compounds of the components A), B) and, if desired C) may exist in the form of their environmentally compatible salts, amides, esters and hydrates.

Suitable salts, esters, amides and hydrates are, in general, those which do not adversly affect the herbicidal action or safening of the active ingredients.

Suitable cations are, in particular, ions of the alkali metals, preferably lithium, sodium and potassium, of the alkaline earth metals, preferably calcium and magnesium, and of the transition metals, preferably manganese, copper, zinc and iron, and also ammonium, it being possible in this case, if desired, for one to four hydrogen atoms to be replaced by C₁-C₄-alkyl, hydroxy-C₁-C₄-alkyl, C₁-C₄-alkoxy-C₁-C₄-alkyl, hydroxy-C₁-C₄₋alkoxy-C₁-C₄-alkyl, phenyl or benzyl, preferably ammonium, isopropylammonium, dimethylammonium, diisopropylammonium, tetramethylammonium, tetrabutylammonium, 2-(2-hydroxyeth-1-oxy)eth-1-yl ammonium, di(2-hydroxyeth-1-yl)ammonium, trimethylbenzylammonium, furthermore phosphonium ions, sulfonium ions, preferably tri(C₁-C₄-aklyl)sulfonium and sulfoxonium ions, preferably, tri(C₁-C₄₋alkyl)sulfoxonium.

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of C₁-C₄-alkanoic acids, preferably formate, acetate, propionate and butyrate.

Suitable esters are alkly-, alkoxyalkyl-, allyl-, propargyl- and oxetan-3-ylesters, preferably C₁-C₁₀-esters, for example methyl-, ethyl-, propyl-, isopropyl-, butyl-, isobutyl-, pentyl-, mexyl- (≡ 1-methyl-hexyl) or isoctyl- (≡ 2-ethylhexyl) ester, C₁-C₄₋alkoxyethyl-esters, for example methoxyethyl-, ethoxyethyl- or butoxyethyl-ester, allylesters, proparyglesters and oxetan-3-ylesters.

Suitable amides are "amide" itself, alkyl- and dialkyl-amides as well as anilides, preferably C₁-C₄-alkyl-amides, for example methyl- or ethyl-amide, di(C₁-C₄-alkyl)-amides, for example dimethyl- or diethyl amide, or anilides, preferably anilide itself or 2-chloro-anilide.

The compounds of the components A), B) and, if desired C) as well as their salts, esters, amides and hydrates also may exist in the form of their tautomers and/or in the form of the pure enantiomere, and also as racemates or diastereomer mixtures.

Preferred herbicidal mixtures with regard to the safening of the herbicidal action in crops are those mixtures according to the present invention which comprise as component A) 4-[2-methyf-3-(4,5-dihydroisoxazol-3-yl)-4-methylsulfonyl-benzoyl]-1-methyl-5-hydroxy-1H-pyrazole, or one of its environmentally compatible salts.

Also preferred are mixtures which comprise as component B) cloquintocet, or one of its environmentally compatible salts, esters and/or hydrates; preferably cloquintocet "acid", cloquintocet mexyl or cloquintocet mexyl x n hydrate (n = 2 to 6), especially cloquintocet mexyl.

Also preferred are mixtures which comprise as component C) at least one herbicidal compound from the group:
C1 - cycloxydim, sethoxydim, tralkoxydim, tepraloxydim;
   - clodinafop-propargyl, diclofop-methyl, fenoxaprop-ethyl, fenoxaprop-P-ethyl, flamprop-methyl or flamprop-isopropyl;
C2 - imazapyr, imazaquin, imazamethabenz-methyl (imazame), imazamox, imazapic, imazethapyr;
   - florasulam, flumetsulam or metosulam;
   - amidosulfuron, azimsulfuron, bensulfuron-methyl, chlorimuron-ethyl, chlorsulfuron, cinosulfuron, cyclosulfamuron, halosulfuron-methyl, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C4 - clopyralid or picloram;
C5 - diflufenzopyr;
C6 - diflufenican, isoxaflutole, mesotrione or sulcotrione (chlormesulone);
C7 - glyphosate or sulfosate;
C8 - glufosinate-ammonium;
C9 - mefenacet;
   - dimethenamid, S-dimethenamid, acetochlor, alachlor, butachlor, metazachlor, metolachlor, S-metolachlor or pretilachlor;
   - tri-allate;
C10 - pendimethalin;
C11 - acifluorfen, acifluorfen-sodium, fluoroglycofen-ethyl or lactofen;
   - oxadiargyl;
   - butafenacil, carfentrazone-ethyl, cinidon-ethyl, flumiclorac-pentyl, flumioxazin, fluthiacet-methyl or sulfentrazone;
   - ET-751, JV 485 or nipyraclofen;
C12 - propanil, pyridate or pyridafol;
   - bentazone;
   - paraquat-dichloride;
   - chlorotoluron, diuron, isoproturon or linuron;
   - bromoxynil;
   - chloridazon;
   - atrazine, cyanazine, simazine or terbutylazine;
   - metamitron or metribuzin;
C14 - 2,4-DB, clomeprop, dichlorprop, dichlorprop-P (2,4-DP-P), fluoroxypyr, MCPA, MCPB, mecoprop, mecoprop-P or triclopyr;
   - dicamba;
   - quinclorac or quinmerac;
C16 - cinmethylin, dymron or oxaciclomefone;
or their environmentally compatible salts and esters.

Especially preferred are mixtures which comprise as component C) at least one herbicidal compound from the group
C1 - clodinafop-propargyl, diclofop-methyl, fenoxaprop-ethyl or fenoxaprop-P-ethyl;
C2 - imazapyr, imazaquin, imazamethabenz-methyl (imazame), imazamox, imazapic, imazethapyr;
   - florasulam, flumetsulam or metosulam;
   - bensulfuron-methyl, cyclosulfamuron, nicosulfuron, rimsulfuron, tritosulfuron, foramsulfuron or iodosulfuron;
C5 - diflufenzopyr;
C6 - diflufenican, isoxaflutole or mesotrione;
C7 - glyphosate or sulfosate;
C8 - glufosinate-ammonium;
C9 - dimethenamid, S-dimethenamid, acetochlor, metazachlor, metolachlor or S-metolachlor;
C10 - pendimethalin;
C11 - carfentrazone-ethyl or cinidon-ethyl;
C12 - pyridate;
   - bentazone;
   - paraquat-dichloride;
   - chlorotoluron or isoproturon;
   - bromoxynil;
   - chloridazon;
   - atrazine;
C14 - clomeprop, dichlorprop, dichlorprop-P (2,4-DP-P), fluoroxypyr, MCPA, mecoprop, mecoprop-P or triclopyr;
   - dicamba;
   - quinclorac or quinmerac;
   or their environmentally compatible salts and esters.

■ Particularly preferred are mixtures which comprise as component C) at least one herbicidal compound from the group
   C1 - clodinafop-propargyl, diclofop-methyl, fenoxaprop-ethyl or fenoxaprop-P-ethyl;
   or their environmentally compatible salts and esters.
   Very particularly preferred are mixtures which comprise as component C) clodinafop-propargyl.
   Also very particularly preferred are mixtures which comprise as component C) fenoxaprop-P-ethyl.
■ Also particularly preferred are mixtures which comprise as component C) at least one herbicidal compound from the group
   C2 - imazapyr, imazaquin, imazamethabenz-methyl (imazame), imazamox, imazapic, imazethapyr;
      - florasulam, flumetsulam or metosulam;
      - bensulfuron-methyl, cyclosulfamuron, nicosulfuron, rimsulfuron, tritosulfuron, foramsulfuron or iodoslfuron;
   C5 - diflufenzopyr;
   C6 - diflufenican, isoxaflutole or mesotrione;
   C7 - glyphosate or sulfosate;
   C8 - glufosinate-ammonium;
   C9 - dimethenamid, S-dimethenamid, acetochlor, metazachlor, metolachlor or S-metolachlor;
   C10 - pendimethalin;
   C11 - carfentrazone-ethyl or cinidon-ethyl;
   C12 - pyridate;
      - bentazone;
      - paraquat-dichloride;
      - chlorotoluron or isoproturon;
      - bromoxynil;
      - chloridazon;
      - atrazine;
   C14 - clomeprop, dichlorprop, dichlorprop-P (2,4-DP-P), fluoroxypyr, MCPA, mecoprop, mecoprop-P or triclopyr;
      - dicamba;
      - quinclorac or quinmerac;
      or their environmentally compatible salts and esters.
      Very particularly preferred are mixtures which comprise as component C) bensulfuron-methyl, cyclosulfamuron, nicosulfuron, rimsulfuron, tritosulfuron, foramsulfuron or iodosulfuron, or its environmentally compatible salts.

Also preferred are mixtures according to the present invention which comprise as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; and as component B) cloquintocet, or one of its environmentally compatible salts, esters and/or hydrates; preferably cloquintocet "acid", cloquintocet mexyl or cloquintocet mexyl x n hydrate (n = 2 to 6), especially cloquintocet mexyl.

Also preferred are mixtures according to the present invention which comprise a as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet, or one of its environmentally compatible salts, esters and/or hydrates; preferably cloquintocet "acid", cloquintocet mexyl or cloquintocet mexyl x n hydrate (n = 2 to 6), especially cloquintocet mexyl; and as component C) at least one herbicidal compound from the group:
C1 acetyl-CoA carboxylase inhibitors (ACC), for example
   - cyclohexenone oxime ethers, such as alloxydim, clethodim, cloproxydim, cycloxydim, sethoxydim, tralkoxydim, butroxydim, clefoxydim or tepraloxydim;
   - phenoxyphenoxypropionic esters, such as clodinafop-propargyl, cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl; or
   - arylaminopropionic acids, such as flamprop-methyl or flamprop-isopropyl;
C2 acetolactate synthase inhibitors (ALS), for example
   - imidazolinones, such as imazapyr, imazaquin, imazamethabenz-methyl (imazame), imazamox, imazapic or imazethapyr;
   - pyrimidyl ethers, such as pyrithiobac-acid, pyrithiobac-sodium, bispyribac-sodium, KIH-6127 or pyribenzoxym;
   - sulfonamides, such as florasulam, flumetsulam or metosulam; or
   - sulfonylureas, such as amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C3 amides, for example
   - allidochlor (CDAA), benzoylprop-ethyl,bromobutide, chlorthiamid, diphenamid, etobenzanid (benzchlomet), fluthiamide, fosamin or monalide;
C4 auxin herbicides, for example
   - pyridinecarboxylic acids, such as clopyralid or picloram; or
   - 2,4-D or benazolin;
C5 auxin transport inhibitors, for example
   - naptalame or diflufenzopyr;
C6 carotenoid biosynthesis inhibitors, for example
   - benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;
C7 enolpyruvylshikimate-3-phosphate synthase inhibitors (EPSPS), for example
   - glyphosate or sulfosate;
C8 glutamine synthetase inhibitors, for example
   - bilanafos (bialaphos) or glufosinate-ammonium;
C9 lipid biosynthesis inhibitors, for example
   - anilides, such as anilofos or mefenacet;
   - chloroacetanilides, such as dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
   - thioureas, such as butylate, cycloate, di-allate, dimepiperate, EPTC, esprocarb, molinate, pebulate, prosulfocarb, thiobencarb (benthiocarb), tri-allate or vernolate; or
   - benfuresate or perfluidone;
C10 mitosis inhibitors, for example
   - carbamates, such as asulam, carbetamid, chlorpropham, orbencarb, pronamid (propyzamid), propham or tiocarbazil;
   - dinitroanilines, such as benefin, butralin, dinitramin, ethalfluralin, fluchloralin, oryzalin, pendimethalin, prodiamine or trifluralin;
   - pyridines, such as dithiopyr or thiazopyr; or
   - butamifos, chlorthal-dimethyl (DCPA) or maleic hydrazide;
C11 protoporphyrinogen IX oxidase inhibitors, for example
   - diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
   - oxadiazoles, such as oxadiargyl or oxadiazon;
   - cyclic imides, such as azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or
   - pyrazoles, such as ET-751, JV 485 or nipyraclofen;
C12 photosynthesis inhibitors, for example
   - propanil, pyridate or pyridafol;
   - benzothiadiazinones, such as bentazone;
   - dinitrophenols, for example bromofenoxim, dinoseb, dinoseb-acetate, dinoterb or DNOC;
   - dipyridylenes, such as cyperquat-chloride, difenzoquat-methylsulfate, diquat or paraquat-dichloride;
   - ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
   - phenols, such as bromoxynil or ioxynil;
   - chloridazon;
   - triazines, such as ametryn, atrazine, cyanazine, desmetryn, dimethamethryn, hexazinone, prometon, prometryn, propazine, simazine, simetryn, terbumeton, terbutryn, terbutylazine or trietazine;
   - triazinones, such as metamitron or metribuzin;
   - uracils, such as bromacil, lenacil or terbacil; or
   - biscarbamates, such as desmedipham or phenmedipham;
C13 synergists, for example
   - oxiranes, such as tridiphane;
C14 growth substances, for example
   - aryloxyalkanoic acids, such as 2,4-DB, clomeprop, dichlorprop, dichlorprop-P (2,4-DP-P), fluoroxypyr, MCPA, MCPB, mecoprop, mecoprop-P or triclopyr;
   - benzoic acids, such as chloramben or dicamba; or
   - quinolinecarboxylic acids, such as quinclorac or quinmerac;
C15 cell wall synthesis inhibitors, for example
   - isoxaben or dichlobenil;
C16 various other herbicides, for example
   - dichloropropionic acids, such as dalapon;
   - dihydrobenzofurans, such as ethofumesate;
   - phenylacetic acids, such as chlorfenac (fenac); or
   - aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid or trimeturon;
   or their environmentally compatible salts.

Especially preferred are mixtures according to the present invention which comprise as component A) 4-[2-methyl-3-(4,5-dihydroisoxazol-3-yl)-4-methylsulfonylbenzoyl]-1-methyl-5-hydroxy-1 H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) at least one herbicidal compound from the group:
C1 - cycloxydim, sethoxydim, tralkoxydim, tepraloxydim;
   - clodinafop-propargyl, diclofop-methyl, fenoxaprop-ethyl, fenoxaprop-P-ethyl, flamprop-methyl or flamprop-isopropyl;
C2 - imazapyr, imazaquin, imazamethabenz-methyl (imazame), imazamox, imazapic, imazethapyr;
   - florasulam, flumetsulam or metosulam;
   - amidosulfuron, azimsulfuron, bensulfuron-methyl, chlorimuron-ethyl, chlorsulfuron, cinosulfuron, cyclosulfamuron, halosulfuron-methyl, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C4 - clopyralid or picloram;
C5 - diflufenzopyr;
C6 - diflufenican, isoxaflutole, mesotrione or sulcotrione (chlormesulone);
C7 - glyphosate or sulfosate;
C8 - glufosinate-ammonium;
C9 - mefenacet;
   - dimethenamid, S-dimethenamid, acetochlor, alachlor, butachlor, metazachlor, metolachlor, S-metolachlor or pretilachlor;
   - tri-allate;
C10 - pendimethalin;
C11 - acifluorfen, acifluorfen-sodium, fluoroglycofen-ethyl or lactofen;
   - oxadiargyl;
   - butafenacil, carfentrazone-ethyl, cinidon-ethyl, flumiclorac-pentyl, flumioxazin, fluthiacet-methyl or sulfentrazone;
   - ET-751, JV 485 or nipyraclofen;
C12 - propanil, pyridate or pyridafol;
   - bentazone;
   - paraquat-dichloride;
   - chlorotoluron, diuron, isoproturon or linuron;
   - bromoxynil;
   - chloridazon;
   - atrazine, cyanazine, simazine or terbutylazine;
   - metamitron or metribuzin;
C14 - 2,4-DB, clomeprop, dichlorprop, dichlorprop-P (2,4-DP-P), fluoroxypyr, MCPA, MCPB, mecoprop, mecoprop-P or triclopyr;
   - dicamba;
   - quinclorac or quinmerac;
C16 - cinmethylin, dymron or oxaciclomefone;
or their environmentally compatible salts and esters.

Especially preferred are mixtures according to the present invention which comprise as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) at least one herbicidal compound from the group:
C1 - clodinafop-propargyl, diclofop-methyl, fenoxaprop-ethyl or fenoxaprop-P-ethyl;
C2 - imazapyr, imazaquin, imazamethabenz-methyl (imazame), imazamox, imazapic, imazethapyr;
   - florasulam, flumetsulam or metosulam;
   - bensulfuron-methyl, cyclosulfamuron, nicosulfuron, rimsulfuron, tritosulfuron, foramsulfuron or iodosulfuron;
C5 - diflufenzopyr;
C6 - diflufenican, isoxaflutole or mesotrione;
C7 - glyphosate or sulfosate;
C8 - glufosinate-ammonium;
C9 - dimethenamid, S-dimethenamid, acetochlor, metazachlor, metolachlor or S-metolachlor;
C10 - pendimethalin;
C11 - carfentrazone-ethyl or cinidon-ethyl;
C12 - pyridate;
   - bentazone;
   - paraquat-dichloride;
   - chlorotoluron or isoproturon;
   - bromoxynil;
   - chloridazon;
   - atrazine;
C14 - clomeprop, dichlorprop, dichlorprop-P (2,4-DP-P), fluoroxypyr, MCPA, mecoprop, mecoprop-P or triclopyr;
   - dicamba;
   - quinclorac or quinmerac;
or their environmentally compatible salts and esters.

Particularly preferred are mixtures according to the present invention which comprise as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) at least one herbicidal compound from the group:
C1 - clodinafop-propargyl, diclofop-methyl, fenoxaprop-ethyl or fenoxaprop-P-ethyl;
or their environmentally compatible salts and esters.
■ Very particularly preferred are mixtures according to the present invention which comprise as component A) 4-[2-methyl-3-(4,5-dihydroisoxazol-3-yl)-4-methyl-suffonylbenzoyl]-1-methyl-5-hydroxy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) clodinafop-propargyl.
   Extraordinary preferred are mixtures which comprise as as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet mexyl; and as component C) clodinafop-propargyl.

□ Very particularly preferred are mixtures according to the present invention which comprise as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) fenoxaprop-P-ethyl.
   Extraordinary preferred are mixtures which comprise as as component A) 4-[2-methyl-3-(4,5-dihydroisoxazol-3-yl)-4-methylsulfonyl-benzoyl]-1-methyl-5-hydroxy-1H-pyrazole, or one of its environmentally compatible salts; as component B) cloquintocet mexyl; and as component C) fenoxaprop-P-ethyl.

Also particularly preferred are mixtures according to the present invention which comprise as component A) 4-[2-methyl-3-(4,5-dihydroisoxazol-3-yl)-4-methylsulfonylbenzoyl]-1-methyl-5-hydroXy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) at least one herbicidal compound from the group:
C2 - imazapyr, imazaquin, imazamethabenz-methyl (imazame), imazamox, imazapic, imazethapyr;
   - florasulam, flumetsulam or metosulam;
   - bensulfuron-methyl, cyclosulfamuron, nicosulfuron, rimsulfuron, tritosulfuron, foramsulfuron or iodosulfuron;
C5 - diflufenzopyr;
C6 - diflufenican, isoxaflutole or mesotrione;
C7 - glyphosate or sulfosate;
C8 - glufosinate-ammonium;
C9 - dimethenamid, S-dimethenamid, acetochlor, metazachlor, metolachlor or S-metolachlor;
C10 - pendimethalin;
C11 - carfentrazone-ethyl or cinidon-ethyl;
C12 - pyridate;
   - bentazone;
   - paraquat-dichloride;
   - chlorotoluron or isoproturon;
   - bromoxynil;
   - chloridazon;
   - atrazine;
C14 - clomeprop, dichlorprop, dichlorprop-P (2,4-DP-P), fluoroxypyr, MCPA, mecoprop, mecoprop-P or triclopyr;
   - dicamba;
   - quinclorac or quinmerac;
   or their environmentally compatible salts and esters.

■ Very particularly preferred are mixtures which comprise as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet, or one of its environmentally compatible salts, esters and/or hydrates, preferably cloquintocet "acid", cloquintocet mexyl or cloquintocet mexyl x n hydrate (n = 2 to 6), especially cloquintocet mexyl; and as component C) bensulfuronmethyl, cyclosulfamuron, nicosulfuron, rimsulfuron, tritosulfuron, foramsulfuron or iodosulfuron, or their environmentally compatible salts; especially iodosulfuron, or their environmentally compatible salts.
   Extraordinary preferred are mixtures which comprise as as component A) 4-[2-methyl-3-(4,5-dihydroisoxazol-3-yl)-4-methylsulfonylbenzoyl]-1-methyl-5-hydroxy-1H-pyrazole, or one of its environmentally compatible salts; as component B) cloquintocet mexyl; and as component C) iodosulfuron, or their environmentally compatible salts.

Also preferred are mixtures which comprise as active ingredients only one 3-heterocyclyl-substituted benzoyl derivative (component A) and one safener (component B).

Especially preferred mixtures thereof are in analogy to the above-mentioned ones.

Also preferred are mixtures which comprise as active ingredients only one 3-heterocyclyl-substituted benzoyl derivative (component A), one safener (component B), and at least one compound of group C) (component C).

Especially preferred mixtures thereof comprise one compound of group C) (component C).

Particularly preferred mixtures thereof are in analogy to the above-mentioned ones.

Also especially preferred mixtures thereof comprise two compounds of group C) (component C).

Also preferred are mixtures which comprise as active ingredients only one 3-heterocyclyl-substituted benzoyl derivative (component A), two safeners wherein one is cloquintocet, or one of its environmentally compatible salts, amides, esters and hydrates, and at least one compound of group C) (component C).

Especially the second safener is selected from the group consisting of dichlormid, benoxacor, LAB 145138, MG 190, furilazole, naphthalic acid anhydride, fenchlorim, fenchlorazole, mefenpyr and isoxadifen.

Particularly preferred mixtures thereof comprise two compounds of group C) (component C).

The present invention also extends to herbicidal compositions which comprise a herbicidally active amount of a herbicidal mixture (comprising components A), B) and, if desired, C) as described above), at least one inert liquid and/or solid carrier and, if desired, at least one surfactant.

The herbicidal compositions according to the invention can effect very good control of broad-leaved weeds and grass weeds in crops such as maize, cereals, rice and soya without damaging the crop plants, an effect observed especially even at low rates of application.

Especially the mixtures which comprise as active ingredients one 3-hetero-cyclyl-substituted benzoyl derivative (component A), and one safener (component B) can effect very good control of broad-leaved weeds and grass weeds in crops such as cereals, rice and soya, especially cereals, without damaging the crop plants.

Also especially the mixtures which comprise as active ingredients only one 3-heterocyclyl-substituted benzoyl derivative (component A), one safener (component B) and at least one compound of group C) (component C) can effect very good control of broad-leaved weeds and grass weeds in crops such as corn, cereals, rice and soya, without damaging the crop plants.

Taking into consideration the variety of application method in question, the herbicidal compositions according to the invention can additionally be employed in a further number of crop plants for eliminating undesirable plants. Examples of suitable crops are the following:
Allium cepa, Ananas comosus, Arachis hypogaea, Asparagus officinalis, Beta vulgaris ssp. altissima, Beta vulgaris ssp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, lpomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Moreover, the herbicidal compositions and synergistic herbicidal mixtures according to the invention may also be employed for controlling harmful plants in modified crops. These modified crops are obtained by genetic engineering methods or by breeding, and - as a rule - they are distinguished by particular, advantageous properties, for example by resistance to certain crop protection agents (inter alia imidazolinone tolerant crops, for example imidazolinone tolerant corn), resistance to plant diseases or pathogens causing plant diseases such as particular insects or microorganism such as fungi, bacteria or viruses. Other particular properties relate, for example, to the harvested material in terms of quality, storing properties, composition and specific constitutions.

The mixtures according to the invention, or the herbicidal compositions comprising them, can be employed, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, spreading or pouring.

The use forms depend on the intended purposes; in any case, they should guarantee the finest possible distribution of the active ingredients according to the invention.

Suitable inert auxiliaries are mineral oil fractions of medium to high boiling point such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, such as N-methylpyrrolidone and water.

Aqueous use forms can be prepared from emulsion concentrates, suspensions, pastes, wettable powders or water-dispersible granules by adding water. To prepare emulsions, pastes or oil dispersions, the substances, as such or dissolved in an oil or solvent, can be homogenized in water by means of wetting agent, tackifier, dispersant or emulsifier. However, it is also possible to prepare concentrates composed of active substance, wetting agent, tackifier, dispersant or emulsifier and, if appropriate, solvent or oil, and these concentrates are suitable for dilution with water.

Suitable surfactants are the alkali metal, alkaline earth metal and ammonium salts of aromatic sulfonic acids, e.g. ligno-, phenol-, naphthalene- and dibutylnaphthalene-sulfonic acid, and of fatty acids, of alkyl- and alkylaryl sulfonates, of alkyl sulfates, lauryl ether sulfates and fatty alcohol sulfates, and salts of sulfated hexa-, hepta- and octa-decanols, and of fatty alcohol glycol ether, condensates of sulfonated naphthalene and its derivatives with formaldehyde, condensates of naphthalene, or of the naphthalenesulfonic acids, with phenol and formaldehyde, polyoxyethylene octylphenyl ether, ethoxylated isooctyl-, octyl- or nonylphenol, alkylphenyl and tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

Powders, materials for spreading and dusts can be prepared by mixing or concomitantly grinding the synergistic herbicidal mixture or the individual active ingredients with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic material, fertilizers such as ammonium sulfate, ammonium phosphate, ammonium nitrate, ureas and products of vegetable origin such as cereal meal, tree bark meal, wood meal and nutshell meal, cellulose powders or other solid carriers.

The concentrations of the mixtures according to the invention in the ready-to-use products can be varied within wide ranges. In general, the formulations comprise from 0.01 to 95% by weight, preferably 0.5 to 90% by weight, of the mixture according to the invention.

The components A) and B) and, if desired, C) can be formulated jointly, but also separately, and/or applied to the plants, their environment and/or seeds jointly or separately. It is preferable to apply the active ingredients simultaneously. However, it is also possible to apply them separately.

The compound of group B) can also be used for penetrating the seed of the crop plant (seed dressing), or to be incorporated into the seed furrows prior to sowing. The other compounds of groups A), and, if desired, C) are applied then separately from the compound of group B).

It is preferably to apply the active ingredients simultaneously. However, it is possible to apply them separately.

Moreover, it may be advantageous to apply the herbicidal compositions according to the invention, jointly or separately, with additional other crop protection agents, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates can also be added.

The mixtures according to the invention and the herbicidal compositions can be applied pre- or post-emergence. If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by). In the case of a post-emergence treatment of the plants, the herbicidal compositions according to the invention are preferably applied by foliar application. Application may be effected, for example, by usual spraying techniques with water as the carrier, using amounts of spray mixture of approx. 100 to 1000 I/ha. The compositions may also be applied by the so-called "low-volume" and "ultra-low-volume" methods, or in the form of so-called granules.

As a rule, the synergistic herbicidal mixtures comprise components A), B) and, if desired, C) in such weight ratios that the safening effect takes place.

The ratios of components A) and B) in the mixture preferably range from 1:0.002 to 1:800, preferably from 1:0.003 to 1:160, particularly preferably from 1:0.02 to 1:160.

The ratios of component A) and C) in the mixture preferably range from 1:0.001 to 1:500, preferably from 1:0.01 to 1:100, particularly preferably from 1:0.1 to 1:50.

The rate of application of pure herbicidal mixture, i.e. without formulation auxiliaries, amounts to 0.2 to 5000 g/ha, preferably 2 to 2000 g/ha, in particular 8 to 1500 g/ha, of active substance (a.s.), depending on the intended aim, the season, the target plants and growth stage.

The rate of application of the 3-heterocyclyl-substituted benzoyl derivative (component A) is from 0,1 to 250 g/ha, as a rule from 5 to 200 g/ha, preferably from 10 to 150 g/ha, of active substance (a.s.).

The preferred rate of application of component B) is from 0.1 to 500 g/ha, as a rule 0.5 to 250 g/ha, preferably 1 to 100 g/ha, of active substance (a.s.).

The preferred rate of application of the optional component C) is 0.1 to 500 g/ha, as a rule 0.5 to 250 g/ha, preferably 1 to 200 g/ha, of active substance (a.s.).

As a rule the application rate of the active ingredients of the optional component C) are as follows:

| Component C | | Class of active ingredient | Active ingredient | Rate of application (g/ha) |
|---|---|---|---|---|
| C1 | acetyl-CoA carboxylase inhibitors | | | 25-400 |
| | | cyclohexenone oxime ethers | | 100-400 |
| | | | cycloxydim | 100-400' |
| | | | sethoxydim | 100-400 |
| | | | tralkoxydim | 100-400 |
| | | phenoxyphenoxypropionic esters | | 25-300 |
| | | | clodinafpop-P-propargyl | 25-100 |
| | | | fenoxaprop-ethyl | 50-300 |
| | | | fenoxaprop-P-ethyl | 25-150 |
| C2 | acetolactate synthase inhibitors (ALS) | | | 1-800 |
| | | imidazolinones | | 20-800 |
| | | | imazapyr | 30-400 |
| | | | imazaquin | 50-300 |
| | | | imazamethabenz | 100-800 |
| | | | imazethapyr | 30-150 |
| | | | imazamox | 20-120 |
| | | pyrimidyl ethers | | 2-120 |
| | | | pyrithiobac-sodium | 2-120 |
| | | sulfonamides | | 1-225 |
| | | | florasulam | 1-20 |
| | | | flumetsulam | 25-225 |
| | | | metosulam | 1-60 |
| | | sulfonylureas | | 1-120 |
| | | | halosulfuron-methyl | 5-120 |
| | | | nicosulfuron | 1-120 |
| | | | primisulfuron-methyl | 10-120 |
| | | | prosulfuron | 10-120 |
| | | | rimsulfuron | 5-120 |
| | | | thifensulfuron-methyl | 10-60 |
| | | | tribenuron-methyl | 10-60 |
| | | | tritosulfuron | 5-120 |
| | | | sulfosulfuron | 10-60 |
| C3 | amides | | | 250-2000 |
| | | - | fluthiamide | 250-2000 |
| C4 | auxin herbicides | | | 25-750 |
| | | pyridinecarboxylic acids | | 25-750 |
| | | | clopyralid | 25-750 |
| | | - | 2,4-D | 50-750 |
| C5 | auxin transport inhibitors | | | 15-100 |
| | | - | diflufenzopyr | 15-100 |
| C6 | carotenoid biosynthesis inhibitors | | | 25-600 |
| | | - | isoxaflutole | 25-200 |
| | | - | sulcotrione | 100-600 |
| | | - | mesotrione | 25-300 |
| | | - | isoxachlortole | 25-200 |
| | | - | ketospiradox | 25-300 |
| C7 | enolpyruvylshikimat-3-phosphate synthase inhibitors (EPSPS) | | | 360-1080 |
| | | - | glyphosate | 360-1080 |
| | | - | sulfosate | 360-1080 |
| C8 | glutamine synthetase inhibitors | | | 10-600 |
| | | | glufosinate-ammonium | 10-600 |
| C9 | lipid biosynthesis inhibitors | | | 60-4000 |
| | | chloroacetanilides | | 60-4000 |
| | | | dimethenamid | 60-2000 |
| | | | S-dimethenamid | 60-2000 |
| | | | acetochlor | 250-4000 |
| | | | metolachlor | 60-4000 |
| | | | S-metolachlor | 60-4000 |
| | | chioureas | | 100-4000 |
| | | | benthiocarb | 1000-4000 |
| C10 | mitosis inhibitors | | | 375-3000 |
| | | dinitroanilines | | 375-3000 |
| | | | pendimethalin | 375-3000 |
| C11 | protoporphyrinogen IX oxidase inhibitors | | | 0.5-600 |
| | | diphenyl ethers | | 50-300 |
| | | | acifluorfen | 50-300 |
| | | | acifluorfen-sodium | 50-300 |
| | | oxadiazoles | | 50-600 |
| | | | oxadiargyl | 50-600 |
| | | cyclic imides | | 0.5-300 |
| | | | carfentrazone-ethyl | 0.5-35 |
| | | | cinidon-ethyl | 3-35 |
| | | | flumiclorac-pentyl | 3-35 |
| | | | butafenacil | 5-300 |
| | | | JV 485 | 50-300 |
| C12 | photosynthesis inhibitors | | | 30-4000 |
| | | - | pyridate | 250-1500 |
| | | | pyridafol | 250-1000 |
| | | benzothiadiazinones | | 480-1440 |
| | | | bentazone | 480-1440 |
| | | dipyridylenes | | 100-800 |
| | | | paraquat-dichloride | 100-800 |
| | | ureas | | 250-1600 |
| | | | diuron | 250-1600 |
| | | | isoprotoron | 250-1600 |
| | | phenols | | 100-700 |
| | | | bromoxynil | 100-700 |
| | | chloridazon | | 500-4000 |
| | | triazines | | 250-4000 |
| | | | atrazine | 250-4000 |
| | | | terbutylazine | 250-4000 |
| | | triazinone | | 30-300 |
| | | | metribuzin | 30-300 |
| C13 | synergists | | | 500-1500 |
| | | oxiranes | | 500-1500 |
| | | | tridiphane | 500-1500 |
| C14 | growth substances | | | 25-1200 |
| | | aryloxyalkanoic acids | | 50-1200 |
| | | | fluoroxypyr | 50-400 |
| | | | MCPA | 400-1200 |
| | | | mecoprop-P | 400-1200 |
| | | benzoic acids | | 75-800 |
| | | | dicamba | |
| | | quinolinecarboxylic acids | | 75-800 |
| | | | quinclorac | 25-600 |
| C16 | various other herbicides | | triaziflam | 25-600 |

### Use examples

The mixtures according to the invention were applied pre- or post-emergence (foliar treatment). The herbicidal compounds of component B) and of component C) were applied in the formulation in which they are present as commercially available product.

The herbicidally active compounds of components A), B) and, if desired, C) were applied in succession or jointly, in the latter case in some cases as a tank mix and in some cases as a readymix, in the form of emulsions, aqueous solutions or suspensions, the vehicle being water (300 - 400 l/ha). In the case of the field trials, application was effected with the aid of a mobile plot sprayer.

The test period extended over 3 to 8 weeks, and the stands were also observed at later points in time.

Damage by the herbicidal compositions was evaluated with reference to a scale of 0% to 100% in comparison with untreated control plots. 0 means no damage and 100 means complete destruction of the plants.

The following examples will demonstrate the action of the herbicidal compositions which can be used according to the invention, without excluding the possibility of other uses.

The herbicidal mixtures according to the invention exert a lower injury than the individual components when used alone.

For example, the post-emergence application of 50 g/ha 4-[2-methyl-3-(4,5-dihydro-isoxazol-3-yl)-4-methylsulfonyl-benzoyl]-1-methyl-5-hydroxy-1 H-pyrazole controls unwanted plants like wild oat, green foxtail and pigweed in an excellent manner but causes damages in spring wheat as well as in durum wheat.
However, the postemergence application of 50 g/ha 4-[2-methyl-3-(4,5-dihydroisoxazol-3-yl)-4-methylsulfonyl-benzoyl]-1-methyl-5-hydroxy-1H-pyrazole and of 30 g/ha cloquintocet mexyl reduces the damages in the crop plants convincingly without reducing the control of the unwanted plants.

Similar results are achieved in spring barley at application rates of 25 g/ha 4-[2-methyl-3-(4,5-dihydroisoxazol-3-yl)-4-methylsulfonyl-benzoyl]-1-methyl-5-hydroxy-1H-pyrazole 30 g/ha cloquintocet mexyl under post emergence conditions.

## Claims

1. A herbicidal mixture comprising
A) a 3-heterocyclyl-substituted benzoyl derivative selected from the group of 4-[2-chloro-3-(3-methyl-isoxazol-5-yl)-4-methylsulfonyl-benzoyl]-1-methyl-5-hydroxy-1H-pyrazole, 4-[2-methyl-3-(3-methyl-isoxazol-5-yl)-4-methylsulfonyl-benzoyl]-1-methyl-5-hydroxy-1 H-pyrazole and 4-[2-methyl-3-(4,5-dihydroisoxazol-3-yl)-4-methylsulfonylbenzoyl]-1-methyl-5-hydroxy-1H-pyrazole;
or one of its environmentally compatible salts,
B) a safening effective amount of cloquintocet, or its environmentally compatible salts, amides, esters and hydrates;
and, if desired,
C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

2. A herbicidal mixtureas claimed in claim 1 comprising as component C) at least one herbicidal compound from the group of:
C1 acetyl-CoA carboxylase inhibitors (ACC):
- cyclohexenone oxime ethers, such as alloxydim, clethodim, cloproxydim, cycloxydim, sethoxydim, tralkoxydim, butroxydim, clefoxydim or tepraloxydim;
- phenoxyphenoxypropionic esters, such as clodinafop-propargyl, cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl; or
- arylaminopropionic acids, such as flamprop-methyl or flamprop-isopropyl;
C2 acetolactate synthase inhibitors (ALS):
- imidazolinones, such as imazapyr, imazaquin, imazamethabenz-methyl (imazame), imazamox, imazapic or imazethapyr;
- pyrimidyl ethers, such as pyrithiobac-acid, pyrithiobac-sodium, bispyribac-sodium, KIH-6127 or pyribenzoxym;
- sulfonamides, such as florasulam, flumetsulam or metosulam; or
- sulfonylureas, such as amidosulfuron, azimsuffuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C3 amides:
- allidochlor (CDAA), benzoylprop-ethyl, bromobutide, chlorthiamid, diphenamid, etobenzanid (benzchlomet), fluthiamide, fosamin or monalide;
C4 auxin herbicides:
- pyridinecarboxylic acids, such as clopyralid or picloram; or
- 2,4-D or benazolin;
C5 auxin transport inhibitors:
- naptalame or diflufenzopyr;
C6 carotenoid biosynthesis inhibitors:
- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;
C7 enolpyruvylshikimate-3-phosphate synthase inhibitors (EPSPS):
- glyphosate or sulfosate;
C8 glutamine synthetase inhibitors:
- bilanafos (bialaphos) or glufosinate-ammonium;
C9 lipid biosynthesis inhibitors:
- anilides, such as anilofos or mefenacet;
- chloroacetanilides, such as dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
- thioureas, such as butylate, cycloate, di-allate, dimepiperate, EPTC, esprocarb, molinate, pebulate, prosulfocarb, thiobencarb (benthiocarb), tri-allate or vernolate; or
- benfuresate or perfluidone;
C10 mitosis inhibitors, for example
- carbamates, such as asulam, carbetamid, chlorpropham, orbencarb, pronamid (propyzamid), propham or tiocarbazil;
- dinitroanilines, such as benefin, butralin, dinitramin, ethalfluralin, fluchloralin, oryzalin, pendimethalin, prodiamine or trifluralin;
- pyridines, such as dithiopyr or thiazopyr; or
- butamifos, chlorthal-dimethyl (DCPA) or maleic hydrazide;
C11 protoporphyrinogen IX oxidase inhibitors
- diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
- oxadiazoles, such as oxadiargyl or oxadiazon;
- cyclic imides, such as azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or
- pyrazoles, such as ET-751, JV 485 or nipyraclofen;
C12 photosynthesis inhibitors:
- propanil, pyridate or pyridafol;
- benzothiadiazinones, such as bentazone;
- dinitrophenols, for example bromofenoxim, dinoseb, dinoseb-acetate, dinoterb or DNOC;
- dipyridylenes, such as cyperquat-chloride, difenzoquat-methylsulfate, diquat or paraquat-dichloride;
- ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols, such as bromoxynil or ioxynil;
- chtoridazon;
- triazines, such as ametryn, atrazine, cyanazine, desmetryn, dimethamethryn, hexazinone, prometon, prometryn, propazine, simazine, simetryn, terbumeton, terbutryn, terbutylazine or trietazine;
- triazinones, such as metamitron or metribuzin;
- uracils, such as bromacil, lenacil or terbacil; or
- biscarbamates, such as desmedipham or phenmedipham;
C13 synergists:
- oxiranes, such as tridiphane;
C14 growth substances
- aryloxyalkanoic acids, such as 2,4-DB, clomeprop, dichlorprop, dichlorprop-P (2,4-DP-P), fluoroxypyr, MCPA, MCPB, mecoprop, mecoprop-P or triclopyr;
- benzoic acids, such as chloramben or dicamba; or
- quinolinecarboxylic acids, such as quinclorac or quinmerac;
C15 cell wall synthesis inhibitors
- isoxaben or dichlobenil;
C16 various other herbicides
- dichloropropionic acids, such as dalapon;
- dihydrobenzofurans, such as ethofumesate;
- phenylacetic acids, such as chlorfenac (fenac); or
- aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid or trimeturon;
or their environmentally compatible salts.

3. A herbicidal mixture as claimed in any of claims 1 or 2 comprising as component C) at least one herbicidal compound from the group of:
C1 - clethodim, sethoxydim, tralkoxydim or tepraloxydim;
- clodinalfop-propargyl, diclofop-methyl, fenoxaprop-eihyl or fenoxaprop-P -ethyl,
- flamprop-methyl or flamprop-isopropyl;
C2 - imazapyr, imazaquin, imazamethabenz-methyl (imazame), imazamox, imazapic or imazethapyr;
- florasulam, flumetsulam or metosulam; or
- amidosulfuron, azimsulfuron, bensulfuron-methyl, chlorimuron-ethyl, chlorsulfuron, cinosulfuron, cyclosulfamuron, halosulfuron-methyl, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron or iodosulfuron;
C4 - clopyralid or picloram;
C5 - diflufenzopyr;
C6 - diflufenican, isoxaflutole, mesotrione or sulcotrione (chlormesulone);
C7 - glyphosate or sulfosate;
C8 - glufosinate-ammonium;
C9 - mefenacet;
- dimethenamid, S-dimethenamid, acetochlor, alachlor, butachlor, metazachlor, metolachlor, S-metolachlor or pretilachlor;
- tri-allate;
C10 - pendimethalin;
C11 - acifluorfen, acifluorfen-sodium, fluoroglycofen-ethyl or lactofen;
- oxadiargyl;
- butafenacil, carfentrazone-ethyl, cinidon-ethyl, flumiclorac-pentyl, flumioxazin, fluthiacet-methyl or sulfentrazone;
- ET-751, JV 485 or nipyraclofen;
C12 - propanil, pyridate or pyridafol;
- benbazone;
- paraquat-dichloride;
- chlorotoluron, diuron, isoproturon, isouron or linuron;
- bromoxynil;
- chloridazon;
- atrazine, cyanazine, simazine, or terbutylazine;
- metamitron or metribuzin;
C14 - 2,4-DB, clomeprop, dichlorprop, dichlorprop-P (2,4-DP-P), fluoroxypyr, MCPA, MCPB, mecoprop, mecoprop-P or triclopyr;
- dicamba;
- quinclorac or quinmerac;
C16 - cinmethylin, dymron or oxaciclomefone;
or their environmentally compatible salts.

4. A herbicidal mixture as claimed in any of claims 1 to 3 comprising as component C) at least one herbicidal compound from the group of:
C1 - clodinafop-propargyl, diclofop-methyl, fenoxaprop-ethyl or fenoxaprop-P-ethyl,
C2 - imazapyr, imazaquin, imazamethabenz-methyl (imazame), imazamox, imazapic or imazethapyr;
- florasulam, flumetsulam or metosulam; or
- bensulfuron-methyl, cyclosulfamuron, nicosulfuron, rimsulfuron, tritosulfuron, foramsulfuron or iodosulfuron;
C5 - diflufenzopyr;
C6 - diflufenican, isoxaflutole or mesotrione;
C7 - glyphosate or sulfosate;
C8 - glufosinate-ammonium;
C9 - dimethenamid, S-dimethenamid, acetochlor, metazachlor, metolachlor or S-metolachlor;
C10 - pendimethalin;
C11 - carfentrazone-ethyl or cinidon-ethyl;
- ET-751, JV 485 or nipyraclofen;
C12 - pyridate;
- bentazone;
- paraquat-dichloride;
- chlorotoluron or isoproturon;
- bromoxynil;
- chloridazon;
- atrazine;
- metamitron or metribuzin;
C14 - clomeprop, dichlorprop, dichlorprop-P (2,4-DP-P), fluoroxypyr, MCPA, mecoprop, mecoprop-P or triclopyr;
- dicamba;
- quinclorac or quinmerac;
or their environmentally compatible salts.

5. A herbicidal mixture as claimed in any of claims 1 to 4 comprising as component A) 4-[2-methyl-3-(4,5-dihydroisoxazol-3-yl)-4-methylsulfonylbenzoyl]-1-methyl-5-hydroxy-1 H-pyrazole, or one of its environmentally compatible salts.

6. A herbicidal mixture as claimed in any of claims 1 to 5 comprising as component B) cloquintocet "acid", cloqintocet mexyl or cloquintocet mexyl x n hydrate (n = 2 to 6).

7. A herbicidal mixture as claimed in any of claims 1, 5 or 6 comprising as active ingredients only one 3-heterocyclyl-substituted benzoyl derivative (component A) and one safener (component B).

8. A herbicidal mixture as claimed in any of claims 1 to 6 comprising as active ingredients only one 3-heterocyclyl-substituted benzoyl derivative (component A), one safener (component B), and one compound of group C) (Component C).

9. A herbicidal mixture as claimed in any of claims 1 to 8 wherein the ratios of the compounds, of the groups A) and B) range from 1:0.002 to 1:800.

10. A herbicidal mixture as claimed in any of claims 1 to 7 or 9 wherein the ratios of the compounds of the groups A) and C) range from 1:0.001 to 1:500.

11. A herbicidal composition comprising a herbicidally active amount of a safened herbicidal mixture as claimed in any of claims, 1 to 10, at least one inert liquid and/or solid carrier and, if desired, at least one surfactant.

12. A process for the preparation of a herbicidal composition as claimed in claim 11, wherein the compounds of group A), B), if desired, C), at least one inert liquid and/or solid carrier and, if desired, at least one surfactant are mixed.

13. A method for controlling undesired vegetation, which comprises applying a synergistic herbicidal mixture as claimed in any of claims 1 to 10, during and/or after the emergence of undesired plants, it being possible for the active compounds of the groups A), B) and, if desired, C) to be applied simultaneously or in succession.

14. A method of controlling undesired vegetation in crops as claimed in claim 13, wherein the leaves of the crop plants and of the undesired plants are treated.

## Patentansprüche

1. Herbizides Gemisch, umfassend
A) ein 3-Heterocyclyl-subtiuiertes Benzoylderivat, ausgewählt aus der Gruppe mit 4-[2-Chlor-3-(3-methylisoxazol-5-yl)-4-methylsulfonylbenzoyl]-1-methyl-5-hydroxy-1H-pyrazol, 4-[2-Methyl-3-(3-methylisoxazol-5-yl)-4-methylsulfonylbenzoyl]-1-methyl-5-hydroxy-1H-pyrazol und 4-[2-Methyl-3-(4,5-dihydroisoxazol-3-yl)-4-methylsulfonylbenzoyl]-1-methyl-5-hydroxy-1H-pyrazol,
oder eines seiner umweltverträglichen Salze,
B) eine als Safener wirksame Menge von Cloquintocet oder seinen umweltverträglichen Salzen, Amiden, Estern und Hydraten;
und, wenn gewünscht,
C) mindestens eine herbizide Verbindung aus der Gruppe der Acetyl-CoA-carboxylase-Inhibitoren (ACC), Acetolactatsynthase-Inhibitoren (ALS), Amide, Auxinherbizide, Auxintransportinhibitoren, Carotinoidbiosynthese-Inhibitoren, Enolpyruvylshikimat-3-phosphatsynthase-Inhibitoren (EPSPS), Glutaminsyntethase-Inhibitoren, Lipidbiosynthese-Inhibitoren, Mitoseinhibitoren, Protoporphyrinogen-IX-oxidase-Inhibitoren, Photosynthese-Inhibitoren, Synergisten, Wachstumssubstanzen, Zellwandbiosynthese-Inhibitoren und einer Vielzahl anderer Herbizide.

2. Herbizides Gemisch nach Anspruch 1, umfassend als Komponente C) mindestens eine herbizide Verbindung aus der Gruppe mit:
C1 Acetyl-CoA-carboxylase-Inhibitoren (ACC):
- Cyclohexenonoximether, wie Alloxydim, Clethodim, Cloproxydim, Cycloxydim, Sethoxydim, Tralkoxydim, Butroxydim, Clefoxydim oder Tepraloxydim;
- Phenoxyphenoxypropionsäureestern, wie Clodinafop-Propargyl, Cyhalofop-Butyl, Diclofop-Methyl, Fenoxaprop-Ethyl, Fenoxaprop-P-Ethyl, Fenthiaprop-ethyl, Fluazifop-Butyl, Fluazifop-P-Butyl, Haloxyfop-Ethoxyethyl, Haloxyfop-Methyl, Haloxyfop-P-Methyl, Isoxapyrifop, Propaquizafop-Ethyl, Quizalofop-Ethyl, Quizalofop-P-Ethyl oder Quizalofop-Tefuryl; oder
- Arylaminopropionsäuren, wie Flamprop-Methyl oder Flamprop-Isopropyl;
C2 Acetolactatsynthase-Inhibitoren (ALS):
- Imidazolinonen, wie Imazapyr, Imazaquin, Imazamethabenz-Methyl (Imazame), Imazamox, Imazapic oder Imazethapyr;
- Pyrimidylethern, wie Pyrithiobac-Säure, Pyrithiobac-Natrium, Bispyribac-Natrium, KIH-6127 oder Pyribenzoxym;
- Sulfonamiden, wie Florasulam, Flumetsulam oder Metosulam; oder
- Sulfonylharnstoffen, wie Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Halosulfuron-Methyl, Imazosulfuron, Metsulfuron-Methyl, Nicosulfuron, Primisulfuron-Methyl, Prosulfuron, Pyrazosulfuron-Ethyl, Rimsulfuron, Sulfometuron-Methyl, Thifensulfuron-Methyl, Triasulfuron, Tribenuron-Methyl, Triflusulfuron-Methyl, Tritosulfuron, Sulfosulfuron, Foramsulfuron oder Iodsulfuron;
C3 Amiden:
- Allidochlor (CDAA), Benzoylprop-Ethyl, Bromobutid, Chlorthiamid, Diphenamid, Etobenzanid (Benzchlomet), Fluthiamid, Fosamin oder Monalid;
C4 Auxinherbiziden:
- Pyridincarbonsäuren, wie Clopyralid oder Picloram; oder
- 2,4-D oder Benazolin;
C5 Auxintransportinhibitoren:
- Naphthalam oder Diflufenzopyr;
C6 Carotinoidbiosynthese-Inhibitoren:
- Benzofenap, Clomazon (Dimethazon), Diflufenican, Fluorchloridon, Fluridon, Pyrazolynat, Pyrazoxyfen, Isoxaflutol, Isoxachlortol, Mesotrion, Sulcotrion (Chlormesulon), Ketospiradox, Flurtamon, Norflurazon oder Amitrol;
C7 Enolpyruvylshikimat-3-phosphatsynthase-Inhibitoren (EPSPS):
- Glyphosat oder Sulfosat;
C8 Glutaminsyntethase-Inhibitoren:
- Bilanafos (Bialaphos) oder Glufosinat-Ammonium;
C9 Lipidbiosynthese-Inhibitoren:
- Aniliden, wie Anilofos oder Mefenacet;
- Chloracetaniliden, wie Dimethenamid, S-Dimethenamid, Acetochlor, Alachlor, Butachlor, Butenachlor, Diethatyl-Ethyl, Dimethachlor, Metazachlor, Metolachlor, S-Metolachlor, Pretilachlor, Propachlor, Prynachlor, Terbuchlor, Thenylchlor oder Xylachlor;
- Thioharnstoffen, wie Butylat, Cycloat, Di-Allat, Dimepiperat, EPTC, Esprocarb, Molinat, Prebulat, Prosulfocarb, Thiobencarb (Benthiocarb), Tri-Allat oder Vernolat; oder
- Benfuresat oder Perfluidon;
C10 Mitoseinhibitoren, zum Beispiel
- Carbamaten, wie Asulam, Carbetamid, Chlorpropham, Orbencarb, Pronamid (Propyzamid), Propham oder Tiocarbazil;
- Dinitroanilinen, wie Benefin, Butralin, Dinitramin, Ethalfluralin, Fluchloralin, Oryzalin, Pendimethalin, Prodiamin oder Trifluralin;
- Pyridinen, wie Dithiopyr oder Thiazopyr; oder
- Butamifos, Chlortal-Dimethyl (DCPA) oder Maleinsäurehydrazid;
C11 Protoporphyrinogen-IX-oxidase-Inhibitoren
- Diphenylethern, wie Acifluorfen, Acifluorfen-Natrium, Aclonifen, Bifenox, Chlornitrofen (CNP), Ethoxyfen, Fluordifen, Fluorglycofen-Ethyl, Fomesafen, Furyloxyfen, Lactofen, Nitrofen, Nitrofluorfen oder Oxyfluorfen;
- Oxadiazolen, wie Oxadiargyl oder Oxadiazon;
- cyclischen Imiden, wie Azafenidin, Butafenacil, Carfentrazon-Ethyl, Cinidon-Ethyl, Flumiclorac-Pentyl, Flumioxazin, Flumipropyn, Flupropacil, Fluthiacet-Methyl, Sulfentrazon oder Thidiazimin; oder
- Pyrazolen, wie ET-751, JV 485 oder Nipyraclofen;
C12 Photosynthese-Inhibitoren:
- Propanil, Pyridat oder Pyridafol;
- Benzothiadiazinonen, wie Bentazon;
- Dinitrophenolen, zum Beispiel Bromfenoxim, Dinoseb, Dinoseb-Acetat, Dinoterb oder DNOC;
- Dipyridylenen, wie Cyperquat-Chlorid, Difenzoquat-Methylsulfat, Diquat oder Paraquat-Dichlorid;
- Harnstoffen, wie Chlorbromuron, Chlortoluron, Difenoxuron, Dimefuron, Diuron, Ethidimuron, Fenuron, Fluometuron, Isoproturon, Isouron, Linuron, Methabenzthiazuron, Methazol, Metobenzuron, Metoxuron, Monolinuron, Neburon, Siduron oder Tebuthiuron;
- Phenolen, wie Bromoxynil oder Ioxynil;
- Chloridazon;
- Triazinen, wie Ametryn, Atrazin, Cyanazin, Desmetryn, Diamethamethryn, Hexazinon, Prometon, Prometryn, Propazin, Simazin, Simetryn, Terbumeton, Terbutryn, Terbutylazin oder Trietazin;
- Triazinonen, wie Metamitron oder Metribuzin;
- Uracilen, wie Bromacil, Lenacil oder Terbacil; oder
- Biscarbamaten, wie Desmedipham oder Phenmedipham;
C13 Synergisten:
- Oxiranen, wie Tridiphan;
C14 Wachstumssubstanzen
- Aryloxyalkansäuren, wie 2,4-DB, Clomeprop, Dichlorprop, Dichlorprop-P (2,4-DP-P), Fluoroxypyr, MCPA, MCPB, Mecoprop, Mecoprop-P oder Triclopyr;
- Benzoesäuren, wie Chloramben oder Dicamba; oder
- Chinolincarbonsäuren, wie Quinclorac oder Quinmerac;
C15 Zellwandsynthese-Inhibitoren
- Isoxaben oder Dichlobenil;
C16 verschiedenen anderen Herbiziden
- Dichlorpropionsäuren, wie Dalapon;
- Dihydrobenzofuranen, wie Ethofumesat;
- Phenylessigsäuren, wie Chlorfenac (Fenac); oder
- Aziprotryn, Barban, Bensulid, Benzthiazuron, Benzofluor, Buminafos, Buthidazol, Buturon, Cafenstrol, Chlorbufam, Chlorfenprop-Methyl, Chloroxuron, Cinmethylin, Cumyluron, Cycluron, Cyprazin, Cyprazol, Dibenzyluron, Dipropetryn, Dymron, Eglinazin-Ethyl, Endothall, Ethiozin, Flucabazon, Fluorbentranil, Flupoxam, Isocarbamid, Isopropalin, Karbutilat, Mefluidid, Monuron, Napropamid, Napropanilid, Nitralin, Oxaciclomefon, Phenisopham, Piperophos, Procyazin, Profluralin, Pyributicarb, Secbumeton, Sulfallat (CDEC), Terbucarb, Triaziflam, Triazofenamid oder Trimeturon; oder ihren umweltverträglichen Salzen.

3. Herbizides Gemisch nach einem der Ansprüche 1 oder 2, umfassend als Komponente C) mindestens eine herbizide Verbindung aus der Gruppe mit:
C1 - Clethodim, Sethoxydim, Tralkoxydim oder Tepraloxydim;
- Clodinafop-Propargyl, Diclofop-Methyl, Fenoxaprop-Ethyl oder Fenoxaprop-P-Ethyl
- Flamprop-Methyl oder Flamprop-Isopropyl;
C2 - Imazapyr, Imazaquin, Imazamethabenz-Methyl (Imazame), Imazamox, Imazapic oder Imazethapyr;
- Florasulam, Flumetsulam oder Metosulam; oder
- Amidosulfuron, Azimsulfuron, Bensulfuron-Methyl, Chlorimuron-Ethyl, Chlorsulfuron, Cinosulfuron, Cyclosulfamuron, Halosulfuron-Methyl, Metsulfuron-Methyl, Nicosulfuron, Primisulfuron-Methyl, Prosulfuron, Pyrazosulfuron-Ethyl, Rimsulfuron, Sulfometuron-Methyl, Thifensulfuron-Methyl, Triasulfuron, Tribenuron-Methyl, Triflusulfuron-Methyl, Tritosulfuron, Sulfosulfuron, Foramsulfuron oder Iodsulfuron;
C4 - Clopyralid oder Picloram;
C5 - Diflufenzopyr;
C6 - Diflufenican, Isoxaflutol, Mesotrion oder Sulcotrion (Chlormesulon);
C7 - Glyphosat oder Sulfosat;
C8 - Glufosinat-Ammonium;
C9 - Mefenacet;
- Dimethenamid, S-Dimethenamid, Acetochlor, Alachlor, Butachlor, Metazachlor, Metolachlor, S-Metolachlor oder Pretilachlor;
- Tri-Allat;
C10 - Pendimethalin;
C11 - Acifluorfen, Acifluorfen-Natrium, Fluorglycofen-Ethyl oder Lactofen;
- Oxadiargyl;
- Butafenacil, Carfentrazon-Ethyl, Cinidon-Ethyl, Flumiclorac-Pentyl, Flumioxazin, Fluthiacet-Methyl oder Sulfentrazon;
- ET-751, JV 485 oder Nipyraclofen;
C12 - Propanil, Pyridat oder Pyridafol;
- Bentazon;
- Paraquat-Dichlorid;
- Chlortoluron, Diuron, Isoproturon, Isouron oder Linuron;
- Bromoxynil;
- Chloridazon;
- Atrazin, Cyanazin, Simazin oder Terbutylazin;
- Metamitron oder Metribuzin;
C14 - 2,4-DB, Clomeprop, Dichlorprop, Dichlorprop-P (2,4-DP-P), Fluoroxypyr, MCPA, MCPB, Mecoprop, Mecoprop-P oder Triclopyr;
- Dicamba;
- Quinclorac oder Quinmerac;
C16 - Cinmethylin, Dymron oder Oxaciclomefon;
oder ihren umweltverträglichen Salzen.

4. Herbizides Gemisch nach einem der Ansprüche 1 bis 3, umfassend als Komponente C) mindestens eine herbizide Verbindung aus der Gruppe mit:
C1- Clodinafop-Propargyl, Diclofop-Methyl, Fenoxaprop-Ethyl oder Fenoxaprop-P-Ethyl;
C2 - Imazapyr, Imazaquin, Imazamethabenz-Methyl (Imazame), Imazamox, Imazapic oder Imazethapyr;
- Florasulam, Flumetsulam oder Metosulam; oder
- Bensulfuron-Methyl, Cyclosulfamuron, Nicosulfuron, Rimsulfuron, Tritosulfuron, Foramsulfuron oder Iodsulfuron;
C5 - Diflufenzopyr;
C6 - Diflufenican, Isoxaflutol oder Mesotrion;
C7 - Glyphosat oder Sulfosat;
C8 - Glufosinat-Ammonium;
C9 - Dimethenamid, S-Dimethenamid, Acetochlor, Metazachlor, Metolachlor oder S-Metolachlor;
C10 - Pendimethalin;
C11 - Carfentrazon-Ethyl oder Cinidon-Ethyl;
- ET-751, JV 485 oder Nipyraclofen;
C12 - Pyridat;
- Bentazon;
- Paraquat-Dichlorid;
- Chlortoluron oder Isoproturon;
- Bromoxynil;
- Chloridazon;
- Atrazin;
- Metamitron oder Metribuzin;
C14 - Clomeprop, Dichlorprop, Dichlorprop-P (2,4-DP-P), Fluoroxypyr, MCPA, Mecoprop, Mecoprop-P oder Triclopyr;
- Dicamba;
- Quinclorac oder Quinmerac;
oder ihren umweltverträglichen Salzen.

5. Herbizides Gemisch nach einem der Ansprüche 1 bis 4, umfassend als Komponente A) 4-[2-Methyl-3-(4,5-dihydroisoxazol-3-yl)-4-methylsulfonylbenzoyl]-1-methyl-5-hydroxy-1H-pyrazol oder eines seiner umweltverträglichen Salze.

6. Herbizides Gemisch nach einem der Ansprüche 1 bis 5, umfassend als Komponente B) Cloquintocet-"Säure", Cloquintocet-Mexyl oder Cloquintocet-Mexyl x n Hydrat (n = 2 bis 6).

7. Herbizides Gemisch nach einem der Ansprüche 1, 5 oder 6, umfassend als Wirkstoffe nur ein 3-Heterocyclyl-substituiertes Benzoylderivat (Komponente A) und einen Safener (Komponente B).

8. Herbizides Gemisch nach einem der Ansprüche 1 bis 6, umfassend als Wirkstoffe nur ein 3-Heterocyclyl-substituiertes Benzoylderivat (Komponente A), einen Safener (Komponente B) und eine Verbindung der Gruppe C) (Komponente C).

9. Herbizides Gemisch nach einem der Ansprüche 1 bis 8, wobei die Verhältnisse der Verbindungen der Gruppen A) und B) von 1:0,002 bis 1:800 reichen.

10. Herbizides Gemisch nach einem der Ansprüche 1 bis 7 oder 9, wobei die Verhältnisse der Verbindungen der Gruppen A) und C) von 1:0,001 bis 1:500 reichen.

11. Herbizide Zusammensetzung, die eine als Herbizid wirksame Menge eines einen Safener enthaltenden herbiziden Gemischs nach einem der Ansprüche 1 bis 10, mindestens eine inerte Flüssigkeit und/oder einen festen Träger und, wenn gewünscht, mindestens ein Tensid umfasst.

12. Verfahren zur Herstellung einer herbiziden Zusammensetzung nach Anspruch 11, wobei die Verbindungen der Gruppe A), B), wenn gewünscht, C), mindestens eine inerte Flüssigkeit und/oder ein fester Träger und, wenn gewünscht, mindestens ein Tensid gemischt werden.

13. Verfahren zur Bekämpfung ungewünschter Vegetation, umfassend das Aufbringen eines synergistischen herbiziden Gemischs nach einem der Ansprüche 1 bis 10 während und/oder nach dem Auftreten ungewünschter Pflanzen, wobei es möglich ist, dass die wirksamen Verbindungen der Gruppen A), B) und, wenn gewünscht, C) gleichzeitig oder nacheinander aufgebracht werden.

14. Verfahren zur Bekämpfung ungewünschter Vegetation in Erntepflanzen nach Anspruch 13, wobei die Blätter der Erntepflanzen und der ungewünschten Pflanzen behandelt werden.

## Revendications

1. Mélange herbicide comprenant
A) un dérivé benzoylique substitué par du 3-hétérocyclyle, choisi parmi le groupe du 4-[2-chloro-3-(3-méthyl-isoxazol-5-yl)-4-méthylsulfonyl-benzoyl]-1-méthyl-5-hydroxy-1H-pyrazole, du 4-[2-méthyl-3-(3-méthyl-isoxazol-5-yl)-4-méthylsulfonyl-benzoyl]-1-méthyl-5-hydroxy-1H-pyrazole et du 4-[2-méthyl-3-(4,5-dihydroisoxazol-3-yl)-4-méthyl-sulfonylbenzoyl]-1-méthyl-5-hydroxy-1H-pyrazole,
ou un de ses sels compatibles sur le plan environnemental,
B) une quantité efficace de protection de cloquintocet ou de ses sels, amides, esters et hydrates compatibles sur le plan environnemental,
et, si cela est souhaité,
C) au moins un composé herbicide du groupe des inhibiteurs d'acétyl-CoA-carboxylase (ACC), des inhibiteurs d'acétolactate-synthase (ALS), des amides, des herbicides d'auxine, des inhibiteurs de transport d'auxine, des inhibiteurs de biosynthèse de caroténoïde, des inhibiteurs d'énolpyruvylshikimate-3-phosphate-synthase (EPSPS), des inhibiteurs de glutamine-synthétase, des inhibiteurs de biosynthèse de lipide, des inhibiteurs de mitose, des inhibiteurs de protoporphyrinogène IX-oxydase, des inhibiteurs de photosynthèse, des agents synergiques, des substances de croissance, des inhibiteurs de biosynthèse de paroi cellulaire et d'une variété d'autres herbicides.

2. Mélange herbicide suivant la revendication 1, comprenant, comme composant C), au moins un composé herbicide parmi le groupe :
C1: des inhibiteurs d'acétyl-CoA-carboxylase (ACC) :
- des éthers de cyclohexénone-oxime, tels que alloxydim, clethodim, cloproxydim, cycloxydim, sethoxydim, tralkoxydim, butroxydim, clefoxydim ou tepraloxydim,
- des esters phénoxyphénoxypropioniques, tels que clodinafop-propargyl, cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl ou quizalofop-tefuryl, ou
- des acides arylaminopropioniques, tels que flamprop-methyl ou flamprop-isopropyl,
C2 : des inhibiteurs d'acétolactate-synthase (ALS) :
- des imidazolinones, telles que imazapyr, imazaquin, imazamethabenz-methyl (imazame), imazamox, imazapic ou imazethapyr,
- des éthers pyrimidyliques, tels que pyrithiobac-acid, pyrithiobac-sodium, bispyribac-sodium, KIH-6127 ou pyribenzoxym,
- des sulfonamides, tels que florasulam, flumetsulam ou metosulam, ou
- des sulfonylurées, telles que amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron ou iodosulfuron,
C3 : des amides :
- allidochlor (CDAA), benzoylprop-ethyl, bromobutide, chlorthiamid, diphenamid, etobenzanid(benzchlomet), fluthiamide, fosamin ou monalide,
C4 : des herbicides d'auxine :
- des acides pyridinecarboxyliques, tels que clopyralid ou picloram, ou
- 2,4-D ou benazolin,
C5 : des inhibiteurs de transport d'auxine :
- naptalame ou diflufenzopyr,
C6 : des inhibiteurs de biosynthèse de caroténoide :
- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon ou amitrol,
C7 : des inhibiteurs d'énolpyruvylshikimate-3-phosphate-synthase (EPSPS) :
- glyphosate ou sulfosate,
C8 : des inhibiteurs de glutamine-synthétase :
- bilanafos (bialaphos) ou glufosinate-ammonium,
C9 : des inhibiteurs de biosynthèse de lipide :
- des anilides, tels que anilofos ou mefenacet,
- des chloroacétanilides, tels que dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor ou xylachlor,
- des thiourées, telles que butylate, cycloate, di-allate, dimepiperate, EPTC, esprocarb, molinate, pebulate, prosulfocarb, thiobencarb(benthiocarb), tri-allate ou vernolate, ou
- benfuresate ou perfluidone,
C10 : des inhibiteurs de mitose, par exemple
- des carbamates, tels que asulam, carbetamid, chlorpropham, orbencarb, pronamid (propyzamid), propham ou tiocarbazil,
- des dinitroanilines, telles que benefin, butralin, dinitramin, ethalfluralin, fluchloralin, oryzalin, pendimethalin, prodiamine ou trifluralin,
- des pyridines, telles que dithiopyr ou thiazopyr, ou
- butamifos, chlorthal-dimethyl (DCPA) ou de l'hydrazide maléique,
C11 : des inhibiteurs de protoporphyrinogène IX-oxydase :
- des éthers diphényliques, tels que acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen ou oxyfluorfen,
- des oxadiazoles, tels que oxadiargyl ou oxadiazon,
- des imides cycliques, tels que azafenidin, butafenacil, carfentrazone-ethyl, cinidon-ethyl, flumiclorac-pentyl, flumioxazin, flumipropyn, flupropacil, fluthiacet-methyl, sulfentrazone ou thidiazimin,ou
- des pyrazoles, tels que ET-751, JV 485 ou nipyraclofen,
C12 : des inhibiteurs de photosynthèse :
- propanil, pyridate ou pyridafol,
- des benzothiadiazinones, telles que bentazone,
- des dinitrophénols, par exemple bromofenoxim, dinoseb, dinoseb-acetate, dinoterb ou DNOC,
- des dipyridylènes, tels que du chlorure de cyperquat, du méthylsulfate de difenzoquat, du diquat ou du dichlorure de paraquat,
- des urées, telles que chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron ou tebuthiuron,
- des phénols, tels que bromoxynil ou ioxynil,
- chloridazon,
- des triazines, telles que ametryn, atrazine, cyanazine, desmetryn, dimethamethryn, hexazinone, prometon, prometryn, propazine, simazine, simetryn, terbumeton, terbutryn, terbutylazine ou trietazine,
- des triazinones, telles que metamitron ou metribuzin,
- des uraciles, tels que bromacil, lenacil ou terbacil, ou
- des biscarbamates, tels que desmedipham ou phenmedipham,
C13 : des agents synergiques :
- des oxirannes, tels que tridiphane,
C14 : des substances de croissance :
- des acides aryloxyalcanoïques, tels que 2,4-DB, clomeprop, dichlorprop, dichlorprop-P (2,4-DP-P), fluoroxypyr, MCPA, MCPB, mecoprop, mecoprop-P ou triclopyr,
- des acides benzoïques, tels que chloramben ou dicamba, ou
- des acides quinoléinecarboxyliques, tels que quinclorac ou quinmerac,
C15 : des inhibiteurs de synthèse de paroi cellulaire :
- isoxaben ou dichlobenil,
C16 : différents autres herbicides :
- des acides dichloropropioniques, tels que dalapon,
- des dihydrobenzofuranes, tels que éthofumésate,
- des acides phénylacétiques, tels que chlorfenac (fenac), ou
- aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam, triazofenamid ou trimeturon,
ou de leurs sels compatibles sur le plan environnemental.

3. Mélange herbicide suivant l'une quelconque des revendications 1 ou 2, comprenant, comme composant C), au moins un composé herbicide parmi le groupe :
C1 - clethodim, sethoxydim, tralkoxydim ou tepraloxydim,
- clodinafop-propargyl, diclofop-methyl, fenoxaprop-ethyl ou fenoxaprop-P-ethyl,
- flamprop-methyl ou flamprop-isopropyl,
C2 - imazapyr, imazaquin, imazamethabenz-methyl (imazame), imazamox, imazapic ou imazethapyr,
- florasulam, flumetsulam ou metosulam, ou
- amidosulfuron, azimsulfuron, bensulfuron-methyl, chlorimuron-ethyl, chlorsulfuron, cinosulfuron, cyclosulfamuron, halosulfuron-methyl, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, tritosulfuron, sulfosulfuron, foramsulfuron
ou iodosulfuron,
C4 - clopyralid ou picloram,
C5 - diflufenzopyr,
C6 - diflufenican, isoxaflutole, mesotrione ou sulcotrione (chlormesulone),
C7 - glyphosate ou sulfosate,
C8 - glufosinate-ammonium,
C9 - mefenacet,
- dimethenamid, S-dimethenamid, acetochlor, alachlor, butachlor, metazachlor, metolachlor, S-metolachlor ou pretilachlor,
- tri-allate,
C10 - pendimethalin,
C11 - acifluorfen, acifluorfen-sodium, fluoroglycofen-ethyl ou lactofen,
- oxadiargyl,
- butafenacil, carfentrazone-ethyl, cinidon-ethyl, flumiclorac-pentyl, flumioxazin, fluthiacet-methyl ou sulfentrazone,
- ET-751, JV 485 ou nipyraclofen,
C12 - propanil, pyridate ou pyridafol,
- bentazone,
- dichlorure de paraquat,
- chlorotoluron, diuron, isoproturon, isouron ou linuron,
- bromoxynil,
- chloridazon,
- atrazine, cyanazine, simazine ou terbutylazine,
- metamitron ou metribuzin,
C14 - 2,4-DB, clomeprop, dichlorprop, dichlorprop-P (2,4-DP-P), fluoroxypyr, MCPA, MCPB, mecoprop, mecoprop-P ou triclopyr,
- dicamba,
- quinclorac ou quinmerac,
C16 - cinmethylin, dymron ou oxaciclomefone,
ou leurs sels compatibles sur le plan environnemental.

4. Mélange herbicide suivant l'une quelconque des revendications 1 à 3, comprenant, comme composant C), au moins un composé herbicide parmi le groupe :
C1- clodinafop-propargyl, diclofop-methyl, fenoxaprop-ethyl ou fenoxaprop-P-ethyl,
C2 - imazapyr, imazaquin, imazamethabenz-methyl (imazame), imazamox, imazapic ou imazethapyr,
- florasulam, flumetsulam ou metosulam, ou
- bensulfuron-methyl, cyclosulfamuron, nicosulfuron, rimsulfuron, tritosulfuron, foramsulfuron ou iodosulfuron,
C5 - diflufenzopyr,
C6 - diflufenican, isoxaflutole ou mesotrione,
C7 - glyphosate ou sulfosate,
C8 - glufosinate-ammonium,
C9 - dimethenamid, S-dimethenamid, acetochlor, metazachlor, metolachlor ou S-metolachlor,
C10 - pendimethalin,
C11 - carfentrazone-ethyl ou cinidon-ethyl,
- ET-751, JV 485 ou nipyraclofen,
C12 - pyridate,
- bentazone,
- dichlorure de paraquat,
- chlorotoluron ou isoproturon,
- bromoxynil,
- chloridazon,
- atrazine,
- metamitron ou metribuzin,
C14 - clomeprop, dichlorprop, dichlorprop-P (2,4-DP-P), fluoroxypyr, MCPA, mecoprop, mecoprop-P ou triclopyr,
- dicamba,
- quinclorac ou quinmerac,
ou leurs sels compatibles sur le plan environnemental.

5. Mélange herbicide suivant l'une quelconque des revendications 1 à 4, comprenant, comme composant A), du 4-[2-méthyl-3-(4,5-dihydroisoxazol-3-yl)-4-méthylsulfonylbenzoyl]-1-méthyl-5-hydroxy-1H-pyrazole, ou un de ses sels compatibles sur la plan environnemental.

6. Mélange herbicide suivant l'une quelconque des revendications 1 à 5, comprenant, comme composant B), du cloquintocet "acide", du cloquintocet mexyl ou du cloquintocet mexyl x n hydrate (n = 2 à 6).

7. Mélange herbicide suivant l'une quelconque des revendications 1, 5 ou 6, comprenant, comme composants actifs, uniquement un dérivé benzoylique substitué par du 3-hétérocyclyle (composant A) et un phytoprotecteur (composant B).

8. Mélange herbicide suivant l'une quelconque des revendications 1 à 6, comprenant, comme composants actifs, uniquement un dérivé benzoylique substitué par du 3-hétérocyclyle (composant A), un phytoprotecteur (composant B), et un composé du groupe C) (composant C).

9. Mélange herbicide suivant l'une quelconque des revendications 1 à 8, dans lequel les rapports entre les composés des groupes A) et B) sont de l'ordre de 1/0,002 à 1/800.

10. Mélange herbicide suivant l'une quelconque des revendications 1 à 7 ou 9, dans lequel les rapports entre les composés des groupes A) et C) sont de l'ordre de 1/0,001 à 1/500.

11. Composition herbicide comprenant une quantité active du point de vue herbicide d'un mélange herbicide protégé conformément à l'une quelconque des revendications 1 à 10, au moins un support liquide et/ou solide inerte et, si cela est souhaité, au moins un agent tensioactif.

12. Procédé de préparation d'une composition herbicide suivant la revendication 11, dans lequel les composés du groupe A), B), si cela est souhaité C), au moins un support liquide et/ou solide inerte et, si cela est souhaité, au moins un agent tensioactif sont mélangés.

13. Procédé de contrôle d'une végétation non souhaitée, qui comprend une application d'un mélange herbicide synergique suivant l'une quelconque des revendications 1 à 10, pendant et/ou après l'émergence des plantes non souhaitées, les composés actifs des groupes A), B) et, si cela est souhaité, C) pouvant être appliqués simultanément ou en succession.

14. Procédé de contrôle d'une végétation non souhaitée dans des récoltes suivant la revendication 13, dans lequel les feuilles des plantes de récolte et des plantes non souhaitées sont traitées.
